Europäisches Patentamt

European Patent Office

Office européen des brevets

(11) Veröffentlichungsnummer: **0 281 644**
**A1**

## (12) EUROPÄISCHE PATENTANMELDUNG

(21) Anmeldenummer: 87103328.8

(22) Anmeldetag: 09.03.87

(51) Int. Cl.⁴: **C08G 18/08 , C08G 18/10 ,**
**C08G 18/30 , C08G 18/72 ,**
**C09D 3/72 , C08K 13/02**

Die Bezeichnung der Erfindung wurde geändert (Richtlinien für die Prüfung im EPA, A-III, 7.3).

(43) Veröffentlichungstag der Anmeldung:
**14.09.88 Patentblatt 88/37**

(84) Benannte Vertragsstaaten:
**AT BE DE ES FR GB IT NL SE**

(71) Anmelder: **Metallogal AG**
**Bubenbergplatz 8**
**CH-3000 Bern(CH)**

(72) Erfinder: **Müller, Günter**
**Rösselweg 6-7**
**D-7591 Sasbach 2(DE)**
Erfinder: **Nagel, Rolf**
**Schartenbergstrasse 42C**
**D-7570 Baden-Baden 23(DE)**
Erfinder: **Stähli, Jürg**
**Schützenstrasse 51**
**CH-3627 Heimberg(CH)**

(74) Vertreter: **Vogeser, Werner, Dipl.-Ing. et al**
**Patentanwälte Hansmann & Vogeser**
**Albert-Rosshaupter-Strasse 65**
**D-8000 München 70(DE)**

(54) **In einer Trockenschicht bis zu 2000 Mikron auftragbare Einkomponenten-Polyurethan-Beschichtungsmasse.**

(57) In einer Trockenschichtdicke bis zu 2000 μm auftragbare Einkomponenten-Polyurethan-Beschichtungsmasse, die als Isocyanatkomponente ein Gemisch aus 50 bis 67 Gew.-% eines aliphatischen Di-oder Polyisocyanats und 33 bis 50 Gew.-% eines aromatischen Di-oder Polyisocyanats enthält.

EP 0 281 644 A1

## In einer Trockenschichtdicke bis zu 2000 μm auftragbare Einkomponenten-Polyurethan-Beschichtungsmasse

Die Erfindung betrifft eine feuchtigkeitshärtende, d.h. Einkomponenten-Polyurethan-Beschichtungsmasse.

Solche Beschichtungsmassen, in denen als Isocyanat aliphatische Di-oder Polyisocyanate verwendet werden, eignen sich insbesondere für die Herstellung von gegen mechanische und/oder Witterungseinflüsse beständigen Beschichtungen auf Gegenständen aus Holz, Beton, Stahl usw. Sie haben gegenüber den Zweikomponenten-Polyurethan-Beschichtungsmassen den Vorteil, daß sie durch Umsetzung mit der Feuchtigkeit der Umgebungsluft aushärten, d.h. daß ihnen nicht vor ihrer Verwendung ein getrennt angelieferter Härter zugesetzt werden muß. Sie konnten aber bisher nur in verhältnismäßig geringen Schichtdicken bis zu 100 μm Trockenfilmdicke auf den Träger aufgetragen werden, weil sich in dickeren Schichten Blasen bildeten und/oder die Beschichtung schlecht am Träger haftete und/oder die ausgehärtete Schicht Aufwerfungen und/oder Risse und/oder Trübungen aufwies. Der durch Beschichtungen derart geringer Schichtdicke erbrachte Schutz gegen mechanische und/oder atmosphärische Einflüsse ist aber oft schlechter oder weniger dauerhaft als erwünscht.

Aufgabe der Erfindung ist eine Einkomponenten-Polyurethan-Beschichtungsmasse, die in einem Arbeitsgang in Schichtdicken bis zu 2000 μm auf einen Träger aufgetragen werden kann, ohne daß die oben genannten Nachteile auftreten.

In den Einkomponenten-Beschichtungsmassen wurden bisher als Isocyanatkomponente aliphatische Di-oder Polyisocyanate verwendet.

Überraschenderweise wurde nun gefunden, daß man mit einer Einkomponenten-Polyurethan-Beschichtungsmasse, die als Isocyanatkomponente ein Gemisch aus 30 bis 70 Vol.-% aliphatischem und 70 bis 30 Vol.-% aromatischem Polyisocyanat enthält, Schichten mit einer Trockenfilmdicke bis zu 2000 μm auftragen kann, ohne daß die oben genannten Nachteile auftreten.

Gegenstand der Erfindung ist die Einkomponenten-Polyurethan-Beschichtungsmasse gemäß Patentansprüchen.

Die Beschichtungsmassen gemäß der Erfindung sind bei Temperaturen zwischen -10°C und +45°C bei relativen Luftfeuchtigkeiten bis über 85% in einer Trockenfilmdicke bis zu 2000 μm auftragbar. Die Durchtrocknung erfolgt störungsfrei und rasch, so daß die Beschichtung innerhalb kurzer Zeit griffest ist. Die aufgetragene Schicht besitzt hohe Elastizität und UV-Beständigkeit, selbst in noch nicht ausgehärtetem Zustand, und es erfolgt kein Ablaufen der Beschichtungsmasse an bis zu 30° geneigten Flächen. Die Oberfläche der ausgehärteten Schicht ist sehr glatt, so daß der Abrieb gering ist. Chemikalien-und Lösungsmittelbeständigkeit sowie Licht-und UV-Beständigkeit sind gut, selbst in noch nicht ausgehärtetem Zustand.

Die folgenden Beispiele veranschaulichen die Erfindung.

|  | Bei-<br>spiel<br>1 | Bei-<br>spiel<br>2 | Bei-<br>spiel<br>3 |
|---|---|---|---|
| Hexamethylendiisocyanat-pre-<br>polymer (NCO = 2,7%) | 18,20 | 17,50 | 18,70 |
| Isophorondiisocyanat-prepoly-<br>mer (NCO = 11,5%) | 7,95 | 7,00 | 9,70 |
| Montmorillonite als Anti-<br>absetzmittel | 0,50 | -,-- | 0,40 |
| hochdisperse Kieselsäure als<br>Antiabsetzmittel | 0,25 | 2,65 | 2,30 |
| Trichlorethylphosphat | 4,55 | 3,50 | 4,70 |
| Mischpolymerisat aus Butyl-<br>acrylat/Vinylisobutylether | 0,50 | 0,50 | 0,25 |
| Urethanbisoxazolidin | 5,30 | 5,30 | 5,20 |
| Dioctyldizinnlaurat | 0,20 | 0,20 | 0,20 |
| Magnesiumsilikathydrat | 6,50 | 9,40 | 9,20 |
| Bariumsulfat | 20,70 | 36,00 | 35,00 |
| Eisenoxidrot | 11,50 | -,-- | 5,60 |
| Chromoxidgrün | -,-- | 5,00 | -,-- |
| Calciumferrit (Korrosions-<br>inhibitor) | 12,50 | -,-- | -,-- |
| Salz aus ungesättigten Poly-<br>aminamiden und höhermoleku-<br>laren sauren Estern | 0,25 | -,-- | 0,50 |
| Lösungsmittelgemisch * | 11,10 | 12,95 | 8,25 |
|  | 100,00 | 100,00 | 100,00 |
| Hexamethylendiisocyanat-<br>prepolymer | 69,6 | 71,4 | 65,9 |
| Isophorondiisocyanat-pre-<br>polymer | 30,4 | 28,6 | 34,1 |
| Festkörpergehalt Gew.-% | 88,9 | 87,05 | 91,75 |
| Bindemittel/Pigment-Verhält-<br>nis | 33,8:<br>66,2 | 21,7:<br>67,3 | 36,3:<br>63,7 |

* Das Lösungsmittelgemisch kann bestehen aus:

aromatischen und/oder aliphatischen Kohlenwasserstoffen

und Estern, beispielsweise:

| | | | | | |
|---|---|---|---|---|---|
| Solvesso 100 | 50 | 25 | 70 | 60 | 25 |
| Xylol | 50 | 25 | 5 | 10 | 25 |
| Testbenzin | -- | 25 | 5 | -- | -- |
| n-Butylacetat | -- | 25 | 20 | 30 | 50 |

Die Rezeptur von Beispiel 1 dient z.B. für die Außenbeschichtung von Stahl mit gutem Korrosionsschutz bei Trockenfilmdicken von ca. 350 μm, die in nur einem Arbeitsgang aufgetragen werden können. Ferner kann man diese Rezeptur auch mit Beispiel 2 kombinieren, beispielsweise: $1 \times 200$ μm Anstrichmasse von Beispiel 1

$1 \times 150$ μm Anstrichmasse von Beispiel 2

Die Rezeptur von Beispiel 2 ist für die Beschichtung von Beton geeignet, wobei vor dem Auftrag dieser Beschichtung eine Vorbehandlung des Betons mit einem Tiefgrund auf Basis eines Einkomponenten-Polyurethans erfolgen muß. Die Trockenfilmdicken der Rezeptur nach Beispiel 2 können beispielsweise betragen: 600 μm, aufgetragen in $2 \times$ je 300 μm.

Die Rezeptur von Beispiel 3 ist besonders geeignet zur Innenbeschichtung von Rohrleitungen (z.B. Öl- oder Gas-Pipelines). Die Beschichtung kann hier mittels eines Molches erfolgen, da aufgrund der Tixotropie kein Ablaufen der Farbe erfolgt.

## Ansprüche

1. In einer Trockenschichtdicke bis zu 2000 μm auftragbare Einkomponenten-Polyurethan-Beschichtungsmasse, **da durch gekennzeichnet**, daß sie als Isocyanatkomponente ein Gemisch aus 50 bis 67 Gew.-% eines aliphatischen Di-oder Polyisocyanats und 33 bis 50 Gew.-% eines aromatischen Di-oder Polyisocyanats enthält.

2. Einkomponenten-Polyurethan-Beschichtungsmasse nach Anspruch 1, **dadurch gekennzeichnet**, daß sie

15 - 20 Gew.-% Hexamethylendiisocyanat-prepolymer, NCO-Gehalt 2,7%,

10 - 15 Gew.-% Isophorondiisocyanat-prepolymer, NCO-Gehalt 11,5%,

0,0 - 1,0 Gew.-% Montmorillonite (Antiabsetzmittel),

0,2 - 3,0 Gew.-% hochdisperse Kieselsäure (Antiabsetzmittel),

3 - 7 Gew.-% Trichlorethylphosphat,

0,1 - 1,0 Gew.-% Butylacrylat/Vinylisobutylether-Copolymer,

3 - 10 Gew.-% Dioctyldizinnlaurat,

0,1 - 0,4 Gew.-% Magnesiumsilikathydrat,

15 - 40 Gew.-% Bariumsulfat,

2 - 15 Gew.-% Chromoxidgrün,

0 - 1,0 Gew.-% Salz aus ungesättigten Polyaminamiden und höhermolekularen sauren Estern,

5 - 15 Gew.-% Lösungsmittelgemisch

besteht.

Europäisches
Patentamt

# EUROPÄISCHER RECHERCHENBERICHT

Nummer der Anmeldung

EP 87 10 3328

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 706 710 (HOOKER CHEMICAL) <br> * Spalte 3, Zeile 35 - Spalte 4, Zeile 2; Ansprüche 1-7 * <br><br> --- | 1 | C 08 G 18/08 <br> C 08 G 18/10 <br> C 08 G 18/30 <br> C 08 G 18/72 <br> C 09 D 3/72 <br> C 08 K 13/02 |
| X | EP-A-0 200 801 (BGB) <br> * Seite 3, Abschnitt 4 - Seite 4, Abschnitt 1; Seite 5, Abschnitt 6 - Seite 10, Abschnitt 3; Ansprüche 1-13 * <br><br> --- | 1,2 | |
| X | US-A-4 038 239 (COYNER et al.) <br> * Spalte 2, Zeile 50 - Spalte 3, Zeile 63; Spalte 6, Zeile 33 - Spalte 12, Zeile 3; Spalte 15, Zeilen 4-6; Ansprüche 1-6 * <br><br> --- | 1,2 | |
| X | DE-A-3 516 806 (BAYER) <br> * Seite 9, Zeilen 11-22; Seite 15, Zeile 18 - Seite 16, Zeile 9; Seite 21, Zeilen 6-12; Anspruch 1 * <br><br> ----- | 2 | RECHERCHIERTE SACHGEBIETE (Int. Cl.4) <br><br> C 08 G <br> C 08 L <br> C 08 K |

Der vorliegende Recherchenbericht wurde für alle Patentansprüche erstellt.

| Recherchenort | Abschlußdatum der Recherche | Prüfer |
|---|---|---|
| DEN HAAG | 29-10-1987 | BOURGONJE A.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82